# EUROPÄISCHE PATENTSCHRIFT

(11) **EP 0 685 420 B1**
(45) Veröffentlichungstag und Bekanntmachung des Hinweises auf die Patenterteilung: **05.08.1998**
(21) Anmeldenummer: 95810348.3
(22) Anmeldetag: 24.05.1995
(51) Int. Cl.: B65H 39/02, B65H 43/00

(54) **Kontrollverfahren zur Anwendung bei der Herstellung von Druckprodukten und Anordnung zur Durchführung des Verfahrens**
Method for controlling the manufacture of printed products and assembly for carrying out the method
Procédé de contrôle pour la fabrication de produits imprimés et ensemble pour la mise en oeuvre du procédé

(30) Priorität: 03.06.1994 CH 1748/94
(43) Veröffentlichungstag der Anmeldung: 06.12.1995
(73) Patentinhaber: Ferag AG, 8340 Hinwil (CH)
(72) Erfinder: Grüninger, Baptist, CH-8332 Russikon (CH)
(74) Vertreter: Frei, Alexandra Sarah

(56) Entgegenhaltungen:
- US-A- 4 799 661
- US-A- 5 143 362
- PATENT ABSTRACTS OF JAPAN vol. 17 no. 233 (M-1407) ,12.Mai 1993 & JP-A-04 361093 (UCHIDA SEIHON KAKOU: YUUGEN) 14.Dezember 1992,
- PATENT ABSTRACTS OF JAPAN vol. 16 no. 290 (M-1272) ,26.Juni 1992 & JP-A-04 077295 (TOPPAN PRINTING CO LIMITED) 11.März 1992,
- PATENT ABSTRACTS OF JAPAN vol. 15 no. 298 (M-1141) ,29.Juli 1991 & JP-A-03 108591 (TOPPAN PRINTING CO LTD) 8.Mai 1991,
- PATENT ABSTRACTS OF JAPAN vol. 13 no. 559 (M-905) ,12.Dezember 1989 & JP-A-01 231765 (TOPPAN PRINTING CO. LTD.) 18.September 1989,
- PATENT ABSTRACTS OF JAPAN vol. 7 no. 98 (M-210) ,26.April 1983 & JP-A-58 022257 (NIHON SHIYASHIN INSATSU K.K.) 9.Februar 1983,

## Beschreibung

Die Erfindung liegt auf dem Gebiete der Weiterverarbeitung von bedruckten Produkten und bezieht sich auf ein Kontrollverfahren gemäss dem Oberbegriff des ersten unabhängigen Patentanspruchs zur Anwendung bei der Herstellung von Druckprodukten wie Zeitungen, Zeitschriften, Broschüren etc. aus einer Mehrzahl verschiedener, bedruckter Bestandteile, beispielsweise einzelner Bogen. Die Erfindung bezieht sich ebenfalls auf eine Anordnung gemäss dem Oberbegriff des entsprechenden, unabhängigen Patentanspruchs zur Durchführung des Kontrollverfahrens.

Druckprodukte wie Zeitungen, Zeitschriften, Broschüren und Ähnliches bestehen häufig aus einer Mehrzahl verschiedener, bedruckter Bestandteile, beispielsweise aus einer Mehrzahl bedruckter Bogen, die durch Sammeln, Einstecken oder Zusammentragen zusammengebracht und dann beispielsweise miteinander verheftet oder durch eine Klebebindung miteinander verbunden werden. Zur Herstellung derartiger Druckprodukte in Hochleistungsverfahren sind Sammel-, Einsteck- bzw. Zusammentragtrommeln oder entsprechende Strecken zum Sammeln, Einstecken und/oder Zusammentragen bekannt. Dabei werden beim Sammeln sattelförmige Träger, beim Einstecken und Zusammentragen V-förmige Abteile kontinuierlich an einer Mehrzahl von Zugabestellen vorbeigeführt und an jeder Zugabestelle wird ein weiterer Bestandteil, beispielsweise ein weiterer Bogen zum entstehenden Produkt zugegeben, wobei beim Sammeln mit einem innersten gefalteten Bogen, beim Einstecken mit einem äussersten, gefalteten Bogen, beim Zusammentragen mit einem ersten meist ungefalteten Bestandteil begonnen wird. Sammel-, Einsteck- und Zusammentrag-Verfahren können auch entsprechend kombiniert werden. Mit den bekannten Hochleistungs-Einrichtungen sind Leistungen bis zu ca. 40'000 Produkten pro Stunde erzielbar.

An den bekannten Einrichtungen zum Zusammenfügen verschiedener bedruckter Bestandteile zu einem Produkt wird das Produkt üblicherweise nach dem Zusammenfügen durch eine Dickenmessung kontrolliert. Mit dieser Dickenmessung wird festgestellt, ob die Produktedicke einer Solldicke entspricht oder ob sie von der Solldicke abweicht. Produkte mit von der Solldicke abweichenden Dicken werden als fehlerhaft identifiziert und entsprechend weiterbehandelt, in der Annahme, dass sie bei zu grosser Dicke einzelne Bestandteile in einer Mehrzahl enthalten und dass bei zu kleiner Dicke Bestandteile fehlen. Produkte, in denen gleichzeitig Bestandteile mehrfach vorkommen und andere fehlen, können mit dieser Kontrollmethode unter Umständen als fehlerfrei interpretiert werden. Da auch die Dicke der einzelnen Bestandteile, beispielsweise Bogen, einer Streuung unterworfen ist, kann es auch vorkommen, dass insbesondere bei Produkten mit einer hohen Zahl von Bestandteilen die Summe dieser Streuungen eine Abweichung der Produktedicke von der Solldicke bewirkt, die in der Grössenordnung der Dicke einzelner Bestandteile liegt, wodurch einwandfreie Produkte als fehlerhaft identifiziert werden können. Mit der beschriebenen Methode ist es nicht möglich, Produkte, die falsch bedruckte Bestandteile oder falsch ausgerichtete Bestandteile enthalten, als fehlerhaft zu identifizieren. Mit anderen Worten: die Dickenmessung am Produkt ist eine nur sehr beschränkt wirksame Fehlerkontrolle.

Für die Kontrolle der Einheitlichkeit einzelner Bestandteile, insbesondere Bogen, sind auch optisch/elektronische Methoden bekannt. Zum Beispiel wird in der EP-A1-534115 (Grapha Holding) vorgeschlagen, jeden Bogen über einen Lesekopf zu führen und das Druckmuster eines bestimmten Bereiches jeden Bogens während dieser Bewegung einzulesen, wie beispielsweise Strichcodes eingelesen werden. Das eingelesene Druckmuster wird dann mit einem Sollmuster verglichen und bei Abweichungen wird ein Fehlersignal erzeugt. Der Lesekopf ist beispielsweise derart an einem Anleger angebracht, dass beim Abziehen aus dem Magazin des Anlegers jeder Bogen über den Lesekopf bewegt wird. Durch entsprechende Synchronisation der Abziehbewegung und der Lesefunktion wird sichergestellt, dass auf jedem abgezogenen Bogen derselbe Bereich eingelesen wird. Leichte Abweichungen in der Position der einzelnen Bogen in bezug auf den Lesekopf können software-mässig als solche interpretiert und aus dem Auswertverfahren eliminiert werden, wenn beim Vergleich von eingelesenem Muster und Sollmuster die beiden zu vergleichenden Muster in gewissen Grenzen gegeneinander verschoben werden können, bis eine maximale Übereinstimmung gefunden wird.

Für eine Kontrollmethode mit einem Lesekopf, wie sie oben beschrieben ist, müssen die einzelnen Bogen in einer Richtung parallel zu ihren Hauptflächen über den Lesekopf bewegt werden. Beinhaltet die Verarbeitung, wie beispielsweise in der beschriebenen Anwendung das Abziehen aus dem Magazin eines Anlegers eine derartige Bewegung, ist die Kontrollmethode vorteilhaft. Müssen die Bogen (Bestandteile des zu erstellenden Produktes) aber nur für die Durchführung der Kontrolle in der beschriebenen Art bewegt werden, wird die Kontrollmethode mit Lesekopf aufwendig. In den eingangs erwähnten Verfahren zur Herstellung von Druckprodukten durch Zusammenfügen einzelner bedruckter Bestandteile in einem Sammel-, Einsteck- und/oder Zusammentragverfahren wären Anleger mit Leseköpfen denkbar im Bereiche der verschiedenen Zuführungen. Damit könnten falsche Bestandteile, Bestandteile mit falscher Orientierung und unter Umständen fehlende Bestandteile in den für die Produkteherstellung notwendigen Zuführungsströmen der Bestandteile festgestellt und korrigiert werden, nicht aber Fehler, die zwischen der Zuführung und der Sammel-/Einsteck-/Zusammentrag-Vorrichtung oder bei der Produkteherstellung selbst entstehen.

Da im Zugabebereich, also da, wo Bestandteile zu entstehenden Produkten zugegeben werden sowohl die entstehenden Produkte als auch die zugeführten Bestandteile in den eingangs beschriebenen Hochleistungsverfahren mit im wesentlichen quer (nicht parallel) zur Förderrichtung ausgerichteten Hauptflächen gefördert werden, müsste in diesem Bereich für eine Kontrolle mit Lesekopf, wie sie oben beschrieben ist, eine alternative oder zusätzliche Bewegung eingeführt werden.

Es sind auch Einrichtungen bekannt, in denen Druckprodukte während ihrer Herstellung identifiziert oder kontrolliert werden, indem mit entsprechenden Lesegeräten an vorbestimmten Orten auf den Druckprodukten angeordnete Informationen gelesen werden. Für die Lesung der Information werden die Produkte an den Leseköpfen vorbei bewegt. Eine elektronische Verarbeitung wird dann initiiert, wenn Information in einer vorgegebenen Form vor dem Lesekopf erscheint. Derartige Vorrichtungen sind beispielsweise beschrieben in den Publikationen US-5143362 und US-4799661.

Es ist nun die Aufgabe der Erfindung, ein Kontrollverfahren zur Anwendung bei der Hochleistungs-Herstellung von Druckprodukten aus einer Mehrzahl von verschiedenen, bedruckten Bestandteilen aufzuzeigen, wobei die Produkte-Herstellung auf an sich bekannte Art durch Sammeln, Einstecken und/oder Zusammentragen mit entsprechend ausgerüsteten Trommeln oder Umlaufsystemen (Strecken) durchgeführt wird, ohne dass die einzelnen Bestandteile oder die daraus entstehenden Produkte für die Kontrolle speziell bewegt oder speziell orientiert werden müssen und wobei durch das Kontrollverfahren trotzdem mehr Fehlerarten sicherer detektierbar sein sollen als mit einer Dickenmessung am zusammengefügten Produkt. Ferner ist es die Aufgabe der Erfindung, eine Anordnung zur Durchführung des Kontrollverfahrens zu schaffen.

Die gestelle Aufgabe wird gelöst durch das Kontrollverfahren und die Anordnung zur Durchführung des Kontrollverfahrens, wie sie in den Patentansprüchen definiert sind.

Das erfindungsgemässe Verfahren besteht im wesentlichen darin, das entstehende Produkt jedesmal nach der Zugabe eines Bestandteils einer optisch/elektronischen Kontrolle zu unterziehen, wobei diese optisch/elektronische Kontrolle beispielsweise in einer Bildaufnahme (z.B. durch stationäre Videokamera) eines Teilbereichs des zu konrollierenden Produktes und einer entsprechenden Bildverarbeitung bestehen kann oder in einer Einlesung von Information vom zu kontrollierenden Produkt durch einen über einen Teilbereich des Produkts bewegten Lesekopf, welche eingelesene Information einem entsprechenden Vergleich mit Sollinformation unterzogen wird. In beiden Fällen kann die kontrollierte Stelle des Produktes ein Teil des Druckbildes oder ein speziell für die Kontrolle aufgebrachter Code, beispielsweise ein Strichcode sein. Das am entstehenden Produkt durchgeführte Kontrollverfahren bringt dabei gegenüber Kontrollen an den Zuführungen der Bestandteile den Vorteil, dass auch Fehler, die beispielsweise zwischen einem Bogenanleger und der Zugabe des entsprechenden Bogens zum entstehenden Produkt oder bei dieser Zugabe selbst entstehen, als solche detektiert werden.

Der Vorteil der optisch/elektronischen Kontrolle gegenüber der Dickenmessung besteht darin, dass nicht nur fehlende, sondern auch falsche oder falsch orientierte Bestandteile als Fehler detektiert werden. Nicht detektiert werden mehrfach zugeführte Bestandteile, ein Fehler, der vom Konsumenten auch als weniger gravierend empfunden wird. Derartige Fehler können aber beispielsweise mit einer zusätzlich zur optisch/elektronischen Kontrolle des entstehenden Produktes mit einer Dickenmessung am zusammengefügten Produkt trotzdem noch von der Weiterverarbeitung eliminiert werden.

Das erfindungsgemässe Kontrollverfahren und die Anordnung zur Durchführung des Verfahrens werden im folgenden detailliert beschrieben und durch Figuren illustriert. Dabei zeigen:
- **Figur 1**: das Prinzip des erfindungsgemässen Kontrollverfahrens und der Anordnung zur Durchführung des Verfahrens in Anwendung mit einem Sammelverfahren zur Produkteherstellung;
- **Figur 2**: ein Ausschnitt aus Kontrollverfahren und Anordnung in Anwendung mit einem Einsteckverfahren zur Produkteherstellung;
- **Figur 3**: ein Ausschnitt aus Kontrollverfahren und Anordnung in Anwendung mit einem Zusammentragverfahren zur Produkteherstellung;
- **Figur 4**: ein Ausschnitt aus Kontrollverfahren und Anordnung, welche Anordnung einen Lesekopf aufweist, der zum Einlesen von Information über das zu kontrollierende Produkt bewegt wird;
- **Figur 5**: das Schema einer für das erfindungsgemässe Verfahren ausgerüsteten Sammel-/Einsteck-/Zusammentragtrommel;
- **Figur 6**: eine für das erfindungsgemässe Kontrollverfahren ausgerüstete Sammeltrommel im Schnitt.

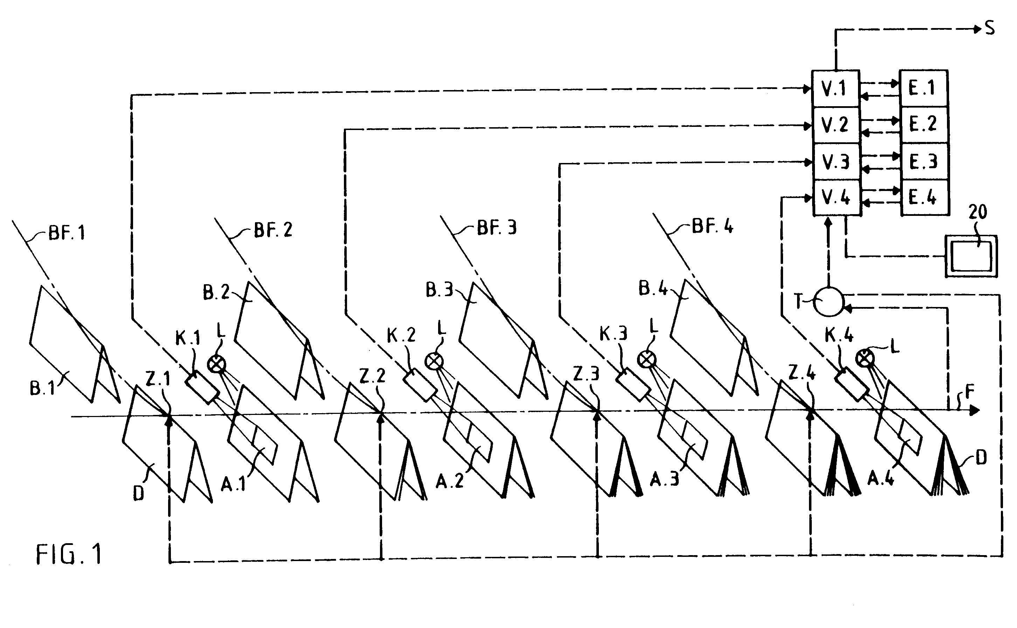

**Figur 1** zeigt das Prinzip des erfindungsgemässen Kontrollverfahrens in der beispielhaften Anwendung mit einem Sammelverfahren zur Herstellung von heftförmigen Produkten durch Sammeln von gefalteten Bogen auf sattelförmigen Trägern, die in der Figur nicht dargestellt sind. Wie bereits eingangs erwähnt, werden beim Sammeln (wie auch beim Einstecken oder Zusammentragen) im Hochleistungsverfahren die entstehenden Produkte P wie auch die einzelnen, zu den entstehenden Produkten zuzugebenden Bestandteile, hier gefaltete Bogen B.1 bis B.4 mindestens im Zugabebereich quer (also nicht parallel) zur Ausrichtung ihrer Hauptflächen gefördert. Die entstehenden Produkte P bilden dabei einen Produktestrom, in dem die Produkte mit Abständen zwischen ihren Hauptflächen von beispielsweise ca. 10 bis 20 cm und mit einem Fördertakt von beispielsweise ca. 10 Exemplaren pro Sekunde (Taktzeit ca. 0,1 sec) in Förderrichtung F gefördert werden.

In der Figur ist ein Förderstrom entstehender Produkte P mit einer Förderrichtung F dargestellt. In der Figur sind ferner die Zugabestellen Z.1 bis Z.4 für die Zugabe von vier gefalteten Bogen B.1 bis B.4 zu jedem entstehenden Produkt dargestellt, welche Bogen als Bogenströme mit den Förderrichtungen BF.1 bis BF.4 zugeführt werden. Auch in diesen Bogenströmen ist die Förderrichtung quer (also nicht parallel) zu den Hauptflächen der Bogen gerichtet. Von links nach rechts in der Figur entsteht jedes Produkt durch sukzessives Zufügen von Bogen.

Das erfindungsgemässe Kontrollverfahren besteht nun darin, jedes entstehende Produkt P des Produktestromes nach jeder Zugabestelle Z.1 bis Z.4 durch ein optisch/elektronisches Kontrollverfahren z.B. eine Bildaufnahme und Verarbeitung des aufgenommenen Bildes zu kontrollieren, wobei das verarbeitete Bild immer den zuletzt zugegebenen Bestandteil betrifft. Zur Durchführung des Verfahrens ist nach jeder Zugabestelle ein Bildaufnahmegerät K.1 bis K.4, vorteilhafterweise eine Videokamera, angeordnet und zwar ausserhalb des Produktestromes und winklig zur Förderrichtung F gegen diesen gerichtet.

Die Bildaufnahmefunktion, die im weitesten Sinne darin besteht, ein momentanes Bild einer Bildverarbeitung V.1 bis V.4 zuzuführen, arbeitet im durch den Produktestrom gegebenen Fördertakt, derart, dass für jedes Produkt des Produktestromes von jedem Bildaufnahmegerät ein Bild zur Weiterverarbeitung gelangt. Die Phasenverschiebung zwischen Fördertakt und Bildaufnahmefunktion ist derart, dass auf jedem Bild, das zur Weiterverarbeitung gelangt nur ein Produkt bzw. ein Ausschnitt (A.1 bis A.4) von nur einem Produkt abgebildet ist. Für die Synchronisation von Fördervorgang und Bildaufnahmefunktion sorgt eine Synchronisation T, die den momentanen Fördertakt aufnimmt, diesen in einen Feintakt, bspw. 100 mal schneller als der Fördertakt (Taktzeit des Feintaktes: ca. 0,001 sec) aufteilt und die Bildaufnahmefunktion nach einer bestimmten Anzahl von Feintakten in jedem Fördertakt aktiviert.

Die von den Bildaufnahmegeräten aufgenommenen Bilder werden in einer an sich bekannten Bildverarbeitung (V.1 bis V.4) mit einem Eichbild, das in einem Eichvorgang aufgenommen und gespeichert (Speicher E.1 bis E.4) worden ist, verglichen und das Vergleichsresultat wird in an sich bekannter Art und Weise zur Erzeugung von Steuersignalen S für beispielsweise eine Ausschleusweiche (nicht dargestellt) oder zu Alarmsignalen zur Aktivierung von Alarmmitteln weiterverarbeitet. Es können auch optische Mittel, beispielsweise ein oder mehrere Bildschirme (20) vorgesehen sein, mittels derer die Steuerung der Anordnung vom Personal durchgeführt oder das Kontrollverfahren und damit auch eine automatische Steuerung überwacht werden kann. Derartige visuelle Mittel sind insbesondere für den im folgenden beschriebenen Eichvorgang vorteilhaft.

Der Eichvorgang wird mit derselben Anordnung durchgeführt. Dazu wird die Herstellung der Produkte ohne Kontrolle gestartet und, sobald nach jeder Zugabestelle ein korrektes Produkt in einem der Zugabestelle entsprechenden Entstehungsstadium vorhanden ist und die Produkte des Produktestromes in Aufnahmeposition sind, das heisst, wenn jedes Aufnahmegerät auf nur ein Produkt gerichtet oder richtbar ist, wird eine Eichfunktion aktiviert. Die Eichfunktion besteht im wesentlichen darin, dass jedes Bildaufnahmegerät ein Bild aufnimmt und das Bild in einem Speicher E.1 bis E.4 dem entsprechenden Bildaufnahmegerät zugeordnet, vorteilhafterweise in elektronisch/digitaler Form abgespeichert wird.

Vorteilhafterweise wird der Eichvorgang bei gestoppter Anordnung durchgeführt und es werden vorher die vorhandenen entstehenden Produkte und die Einstellungen der Bildaufnahmegeräte, die vorteilhafterweise auf möglichst kontrastreiche Ausschnitte gerichtet sind, visuell kontrolliert und fein justiert. Es ist aber auch möglich, bei gleichbleibender Einstellung an der arbeitenden Maschine eine "fliegende" Eichung vorzunehmen, wenn beispielsweise von einem Produkt ohne Unterbruch auf ein anderes gewechselt wird, wobei dann für die ersten entstehenden neuen Produkte ein Eichvorgang initiiert wird.

Die Aufnahmeposition der entstehenden Produkte ist entweder durch die Synchronisation T vorgegeben oder kann während des Eichvorgangs (nur für stationäre Eichung) frei gewählt und in der Synchronisation als Feintaktzahl gespeichert werden.

Es ist vorteilhaft, für die Eichbilder grössere Ausschnitte aufzunehmen als für die Kontrollbilder. Für den Bildvergleich kann dann das Kontrollbild innerhalb des Eichbildes (software-mässig) verschoben werden, bis eine maximale Übereinstimmung gefunden wird. Auf diese Weise kann verhindert werden, dass relativ zum Eichbild leicht verschobene, sonst aber korrekte Bestandteile als Fehler interpretiert werden. Derselbe Effekt kann offensichtlich auch erzielt werden durch ein Kontrollbild, das grösser ist als das Eichbild. Werden die entstehenden Produkte und damit auch ihre Bestandteile vor der Aufnahme des Kontrollbildes mit herkömmlichen Ausrichtmitteln beispielsweise seitlich ausgerichtet, kann der Grössenunterschied zwischen Eichbild und Kontrollbild auf ein Minimum beschränkt werden, womit für die Bildverarbeitung bei gleicher Rechenkapazität viel Rechenzeit gespart werden kann.

Wie bereits erwähnt, ist der Fördertakt durch die unter Umständen variable Fördergeschwindigkeit in Förderrichtung F und durch den festen Produkteabstand gegeben. Mit demselben Takt werden die Zugabestellen (Z.1 bis Z.4) für die Zugabe der Bestandteile und die Bildaufnahmefunktion (mit Feintakt) gesteuert, was in der Figur 1 durch eine Synchronisation T und entsprechende Signallinien symbolisch dargestellt ist.

In den meisten Fällen wird es notwendig sein, die Produkte in Aufnahmeposition durch eine entsprechend ausgerichtete Lichtquelle L zu beleuchten, wobei die Belichtung konstant oder wie die Bildaufnahme getaktet sein kann.

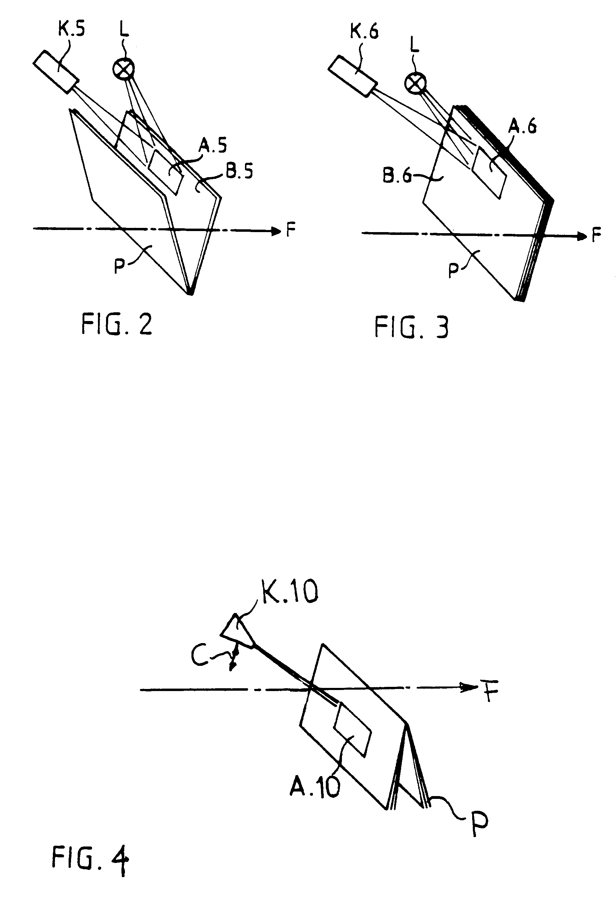

Während beim Sammeln die gefalteten Bogen aussen auf das entstehende Produkt zugegeben werden und deshalb die Kontrollbilder von der Aussenseite der entstehenden Produkte erstellt werden können, werden beim Einstekken die Bestandteile (gefaltet oder nicht gefaltet) innen in das entstehende Produkt eingefügt und müssen deshalb die Kontrollbilder auf der Innenseite der mittig geöffneten, entstehenden Produkte aufgenommen werden. Dies zeigt **Figur 2**, die als Ausschnitt aus einer zur Figur 1 analogen Darstellung aufzufassen ist und in der ein Bildaufnahmegerät K.5 ein Kontrollbild eines eingesteckten, gefalteten Bogens B.5 aufnimmt, wobei der Bogen B.5 der zuletzt zugegebene und deshalb mittlerste Bogen des entstehenden Produktes P ist.

**Figur 3** zeigt in einem Ausschnitt, der dem Ausschnitt gemäss Figur 2 entspricht auch noch das erfindungsgemässe Kontrollverfahren in Anwendung mit einem Zusammentragverfahren. In diesem Verfahren werden meist ungefaltete Bestandteile (z.B. B.6) zu einem Produkt stapelartig aufeinander geschichtet, wobei das entstehende, stapelförmige Produkt P üblicherweise in einem V-förmigen Abteil (nicht dargestellt), während einer kontinuierlichen Förderung in Förderrichtung F zusammengebracht und dann beispielsweise durch eine Klebeverbindung entlang einer Kante miteinander verbunden werden. Die Figur 3 zeigt das entstehende, stapelförmige Produkt P, dem als letzter Bestandteil der Bogen B.6 zugegeben wurde und von dem durch das Bildaufnahmegerät K.6 ein Kontrollbild (Ausschnitt A.6) aufgenommen wird.

**Figur 4** zeigt einen Ausschnitt aus dem Verfahren, wie es in der Figur 1 dargestellt ist, wobei nicht ein stationäres Bildaufnahmegerät verwendet wird, sondern ein Lesekopf K.10, der für das Einlesen einer Information auf dem entstehenden Produkt P über einen Bereich A.10 dieses Produktes bewegt wird (Pfeil C). Dieser Bereich enthält, wie oben beschrieben einen für den bestimmten Bogen charakteristischen Bereich des Druckbildes oder einen eigens für die Kontrollfunktion aufgebrachten Kontrollcode (z.B. eine Strichcode). Im Falle eines Kontrollcodes, der produktunabhängig gehalten werden kann, kann auf eine Eichung im oben beschriebenen Sinne verzichtet werden. Der Sollcode kann direkt als digitale Information in das System eingegeben werden. Auch für die Einlesung von Information mit einem bewegten Lesekopf kann in an sich bekannter Art und Weise eine begrenzte Streuung der Position dieser Information mit in die Auswertung einbezogen werden.

Der Lesekopf K.10 muss in jedem Kontrollzyklus den zu konrollierenden Bereich des Produktes überfahren bzw. entsprechend bewegt werden und er muss wieder in seine ursprüngliche Position zurückbewegt werden.

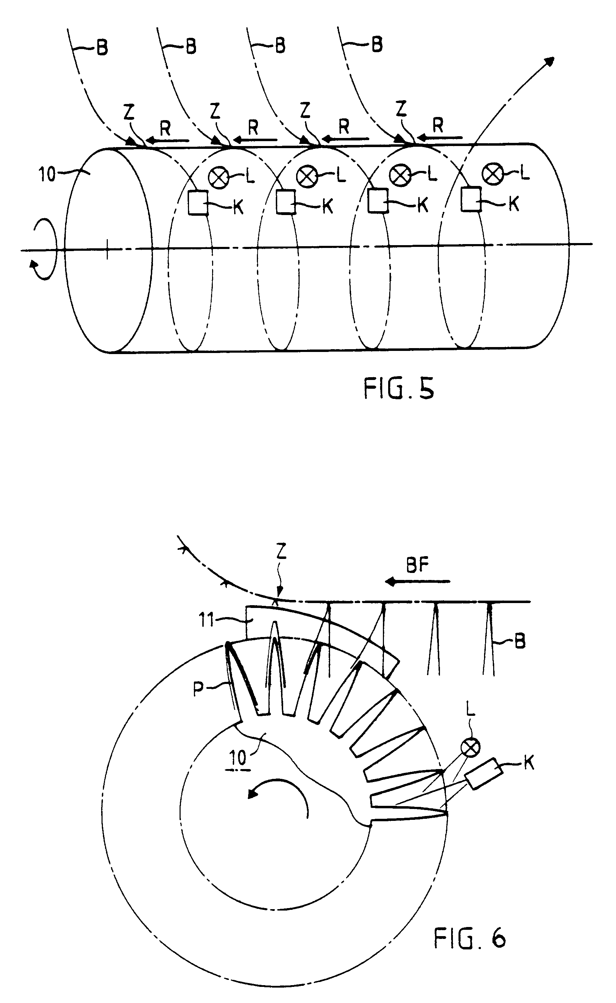

**Figuren 5 und 6** zeigen noch sehr schematisch eine Anordnung mit einer Trommel (Sammel-/Einsteck-/Zusammentragtrommel), in der die Förderrichtung F der entstehenden Produkte nicht wie in der Figur 1 (Anordnung beispielsweise mit Umlaufsystem) im wesentlichen geradlinig ausgerichtet ist, sondern sich im wesentlichen spiralförmig um eine Trommel windet. Die entstehenden Produkte rotieren dabei mit der Trommel 10 und werden gleichzeitig in achsialer Richtung der Trommel verschoben. Figur 5 zeigt eine derartige Trommel als Ansicht mit Blickwinkel senkrecht zur Trommelachse, Figur 6 zeigt eine derartige Trommel (Sammeltrommel) senkrecht zur Trommelachse geschnitten.

Die Zugabestellen Z, sind für eine Trommel auf einer achsial ausgerichteten Linie angeordnet, vorteilhafterweise auch die Bildaufnahmegeräte oder Leseköpfe K und die Lichtquellen L. Vorteilhafterweise werden die Produkte vor der Kontrolle seitlich gerichtet (R), beispielsweise durch ein Richtblech 11, gegen das die Produkte gestossen werden. In der Trommel der Figur 5 sind die Bildaufnahmegeräte oder Leseköpfe K derart angeordnet, dass die Kontrolle unmittelbar nach der entsprechenden Zugabestelle Z erfolgt. In der Trommel gemäss Figur 6 erfolgt die Kontrolle (K) unmittelbar vor der Zugabestelle Z für den nächsten Bestandteil.

Ein spezielles Verfahren, für das sich das erfindungsgemässe Kontrollverfahren ebenfalls eignet, ist das sogenannte personalisierte Einstecken (beschrieben beispielsweise in der Publikation EP-511159 bzw. US-5280895 (F306) derselben Anmelderin), bei dem in jedes einzelne entstehende Produkt nur die für dieses bestimmte Produkt vorbestimmten Bestandteile eingesteckt werden, beispielsweise auf die Adresse einer Zeitschrift abgestimmte Beilagen. Die Zugabestellen werden dann derartig gesteuert, dass sie in vorbestimmter Weise entweder den entsprechenden Bestandteil zum gerade zu bearbeitenden Produkt zugeben oder nicht. Für die Anwendung des erfindungsgemässen Kontrollverfahrens mit einem derartigen Verfahren, muss das Kontrollverfahren dahingehend angepasst werden, dass die Bildaufnahme- oder Lesefunktion durch eine übergeordnete Steuerung derart gesteuert wird, dass eine Bildaufnahme oder Lesung und eine Weiterverarbeitung der aufgenommenen Information nur aktiviert wird, wenn der entsprechende Bestandteil zu dem bestimmten entstehenden Produkt zuzugeben war. Das heisst also mit anderen Worten, dass die Bildaufnahme- oder Lesefunktion nicht starr getaktet abläuft, sondern auf die Zusammensetzung der entstehenden Produkte abgestimmt abläuft.

Trommeln und Umlaufsysteme, sowie verwandte Einrichtungen zum Sammeln, Einstecken und/oder Zusammentragen, die sich für das erfindungsgemässe Kontrollverfahren eignen, sowie dazugehörende Einrichtungen zum Zuführen von Bestandteilen zu diesen Systemen sind beschrieben beispielsweise in den folgenden Publikationen derselben Anmelderin: CH-584153, bzw. US-3951399 (F69) und EP-0241634, bzw. US-4709910 (F213) für Trommeln, EP-0341425, bzw. US-5052667 (F260) für Sammeltrommeln, EP-0095603, bzw. US-4489930 (F147) für Sammelstrecken, CH-669944, bzw. US-4743005 (F209), EP-0341423, bzw. US-4981291 (F262) für Trommeln mit verschiedener Anwendung, EP-0346578, bzw. US-5104108 (F265) für Umlaufsysteme verschiedener Anwendung.

## Patentansprüche

1. Kontrollverfahren zur Anwendung bei der Herstellung von Druckprodukten aus verschiedenen bedruckten Bestandteilen (B.1 bis B.4), die für diese Herstellung durch Sammeln, Einstecken und/oder Zusammentragen zusammengebracht werden, indem das entstehende Produkt (P) in einem Produktestrom, in dem die Produkte in einer im wesentlichen quer zur Ausrichtung ihrer Hauptflächen gerichteten Förderrichtung (F) kontinuierlich mit einem durch die Fördergeschwindigkeit und durch die Produkteabstände im Produktestrom bestimmten Fördertakt gefördert werden, während nacheinander an Zugabestellen (Z.1 bis Z.4) die verschiedenen Bestandteile zu den entstehenden Produkten zugegeben werden, **dadurch gekennzeichnet**, dass das entstehende Produkt (P) nach Zugabestellen (Z.1 bis Z.4) einer optisch/elektronischen Kontrolle unterzogen wird, wobei mit einem Bildaufnahmegerät (K.1 bis K.6) ein Bild des Produktes oder eines Teilbereichs des Produktes aufgenommen oder mit einem bewegten Lesekopf (K.10) Information von einem Bereich des Produktes eingelesen wird, wobei die Bildaufnahme- oder Lesefunktion durch eine Synchronisation (T) mit dem Fördertakt und mit einem Feintakt, der durch Aufteilung des Fördertaktes gebildet wird, mit der Förderung der entstehenden Produkte und mit der Zugabe der Bestandteile synchronisiert wird, wobei die aufgenommenen Bilder bzw. die eingelesenen Informationen elektronisch verarbeitet werden, indem jedes der aufgenommenen Bilder oder jede der eingelesenen Informationen mit einem in einem Eichvorgang aufgenommenen oder digital eingegebenen und gespeicherten Eichbild bzw. Sollinformationen verglichen wird, und wobei die Resultate der elektronischen Verarbeitung zu Steuersignalen für Weiterverarbeitung oder Weiterförderung der Produkte, die auf das Sammeln, Einstecken oder Zusammentragen folgen, oder zu Alarmsignalen zur Aktivierung von Alarmmitteln weiterverarbeitet werden.

2. Kontrollverfahren nach Anspruch 1, **dadurch gekennzeichnet**, dass die Bildaufnahme- oder Einlesefunktion von einer übergeordneten Steuerung derart gesteuert wird, dass sie nur in denjenigen Fördertakten aktiviert wird, in denen der entsprechende Bestandteil zum entstehenden Produkt zuzugeben ist und dass sie unterdrückt wird, wenn der entsprechende Bestandteil nicht zuzugeben ist.

3. Kontrollverfahren nach einem der Ansprüche 1 oder 2, **dadurch gekennzeichnet**, dass die Druckprodukte durch Sammeln von Bestandteilen auf sattelförmigen Trägern hergestellt werden und dass die zu verarbeitenden Bilder oder Informationen auf einem Bereich der Aussenfläche der entstehenden Produkte aufgenommen oder eingelesen werden.

4. Kontrollverfahren nach einem der Ansprüche 1 bis 3, **dadurch gekennzeichnet**, dass die Druckprodukte durch Einstecken hergestellt werden und dass die zu verarbeitenden Bilder oder Informationen auf einem Bereich der Innenseite der geöffneten Produkte aufgenommen oder eingelesen werden.

5. Kontrollverfahren nach einem der Ansprüche 1 bis 3, **dadurch gekennzeichnet**, dass durch Zusammentragen in V-förmigen Abteilen stapelförmige Produkte hergestellt werden und dass die zu verarbeitenden Bilder oder Informationen auf einem Bereich einer Hauptfläche des stapelförmigen Produktes aufgenommen oder eingelesen werden.

6. Kontrollverfahren nach einem der Ansprüche 1 bis 5, **dadurch gekennzeichnet**, dass der Eichvorgang darin besteht, die Herstellung der Druckprodukte ohne Kontrolle zu starten, zu stoppen, wenn nach jeder Zugabestelle ein korrektes, der vorangehenden Zugabestelle entsprechendes, entstehendes Produkt in Aufnahmeposition vorhanden ist, die Bildaufnahmegeräte fein einzustellen und die Eichbilder aufzunehmen und zu speichern.

7. Kontrollverfahren nach einem der Ansprüche 2 bis 6, **dadurch gekennzeichnet**, dass ein Eichvorgang, in dem aufgenommene Bilder oder eingelesene Information als Sollbilder oder Sollinformation gespeichert werden, jederzeit initiierbar und ohne Anhalten der Druckprodukteherstellung durchführbar ist.

8. Kontrollverfahren nach einem der Ansprüche 2 bis 7, **dadurch gekennzeichnet**, dass die gespeicherten Sollbilder oder Sollinformationen einen grösseren Bereich des entstehenden Produktes betreffen als die für das Kontrollverfahren aufzunehmenden Bilder oder einzulesenden Informationen.

9. Anordnung zur Durchführung des Verfahrens nach einem der Ansprüche 1 bis 8, welche Anordnung Mittel zur kontinuierlichen Förderung der entstehenden Produkte (P) in einer Förderrichtung (F) und Mittel zur Zugabe von einzelnen Bestandteilen (B.1 bis B.4) an in Förderrichtung (F) aufeinanderfolgenden Zugabestellen (Z.1 bis Z.4) zu den entstehenden Produkten aufweist, **dadurch gekennzeichnet**, dass in Förderrichtung (F) nach Zugabestellen (Z.1 bis Z.4) ein stationäres Bildaufnahmegerät oder ein bewegbarer Lesekopf (K.1 bis K..6, K.10) angeordnet ist, welche Bildaufnahmegeräte oder Leseköpfe ausserhalb des Produktestromes angeordnet sind und winklig zur Förderrichtung (F) gegen den Förderstrom gerichtet sind, dass die Bildaufnahmegeräte oder Leseköpfe mit Verarbeitungseinheiten (V.1 bis V.3), denen individuelle Speicher (E.1 bis E.4) oder ein gemeinsamer Speicher zugeordnet sind, verbunden sind und dass zur Synchronisation der Bildaufnahme- oder Einlesefunktion mit der Förderung der entstehenden Produkte und mit der Zugabe der Bestandteile eine Synchronisationseinheit (T) vorgesehen ist.

10. Anordnung nach Anspruch 9, **dadurch gekennzeichnet**, dass das Mittel zur kontinuierlichen Förderung der entstehenden Produkte eine Trommel oder ein Umlaufsystem mit sattelförmigen Trägern und/oder V-förmigen Abteilen ist.

11. Anordnung nach Anspruch 9 oder 10, **dadurch gekennzeichnet**, dass jedem Bildaufnahmegerät oder Lesekopf eine Lichtquelle (L) zugeordnet ist.

12. Anordnung nach einem der Ansprüche 9 bis 11, **dadurch gekennzeichnet**, dass visuelle Mittel (20) zur Durchführung der Eichung und zur Überwachung des Verfahrens vorgesehen sind.

## Claims

1. Control method for application in the manufacture of printed products from different printed constituents (B.1 to B.4) which, for this manufacture, are brought together by collection, insertion and/or collation, in that the product (P) being produced [lacuna] in a product stream in which the products are conveyed continuously, in a conveying direction (F) that is essentially transverse with respect to the alignment of their main faces, at a conveying cycle that is determined by the conveying speed and by the product spacings in the product stream, while the different constituents are added one after another to the products being produced, at addition points (Z.1 to Z.4), characterized in that the product (P) being produced is subjected to optical/electronic monitoring after addition points (Z.1 to Z.4), an image recording device (K.1. to K.6) being used to record an image of the product or a sub-region of the product, or information being read from a region of the product, using a moving reading head (K.10), the image recording or reading function being synchronized with the conveyance of the product being produced and with the addition of the constituents by a synchronization means (T) having the conveying cycle and having a fine cycle that is formed by dividing the conveying cycle, the recorded images or the information read being processed electronically by each of the recorded images or each item of information read being compared with a calibration image or desired information item that is recorded or entered digitally and stored in a calibration operation, and the results of the electronic processing being further processed to form control signals for further processing or forwarding of the products which follows the collection, insertion or collation, or to form alarm signals for activating alarm means.

2. Control method according to Claim 1, characterized in that the image recording or reading function is controlled by a higher-order controller in such a way that the said function is activated only in those conveying cycles in which the appropriate constituent is added to the product being produced and that the said function is suppressed when the appropriate constituent is not added.

3. Control method according to either of Claims 1 and 2, characterized in that the printed products are manufactured by collecting constituents on saddle-like supports, and in that the images or information items to be processed are recorded or read on a region of the outer surface of the products being produced.

4. Control method according to one of Claims 1 to 3, characterized in that the printed products are manufactured by insertion and in that the images or information items to be processed are recorded or read on a region of the inside of the opened products.

5. Control method according to one of Claims 1 to 3, characterized in that stack-like products are manufactured by collation in V-shaped compartments, and in that the images or information items to be processed are recorded or read on a region of a main face of the stack-like product.

6. Control method according to one of Claims 1 to 5, characterized in that the calibration operation consists in starting the manufacture of the printed products without control, stopping when, after each addition point, a correct product that is being produced and that corresponds to the preceding addition point is present in the recording position, finely adjusting the image recording devices and recording and storing the calibration images.

7. Control method according to one of Claims 2 to 6, characterized in that a calibration operation, in which recorded images or information items read in are stored as desired images or desired information items, can be initiated at any time and can be carried out without stopping the manufacture of printed products.

8. Control method according to one of Claims 2 to 7, characterized in that the stored desired images or desired information items relate to a larger region of the product being produced than the images to be recorded or information items to be read in for the control method.

9. Arrangement for carrying out the method according to one of Claims 1 to 8, which arrangement has means for continuously conveying the products (P) being produced in a conveying direction (F) and means for adding individual constituents (B.1 to B.4) to the products being produced, at addition points (Z.1. to Z.4) that follow one another in the conveying direction (F), characterized in that a stationary image recording device or a movable reading head (K.1 to K.6, K.10) is arranged after addition points (Z.1 to Z.4) in the conveying direction (F), the said image recording devices or reading heads being arranged outside the product stream and being directed at an angle to the conveying direction (F), counter to the conveying stream, in that the image recording devices or reading heads are connected to processing units (V.1 to V.3) to which individual stores (E.l to E.4) or a common store are assigned, and in that a synchronization unit (T) is provided for synchronizing the image recording or reading function with the conveyance of the products being produced and with the addition of the constituents.

10. Arrangement according to Claim 9, characterized in that the means for continuously conveying the products being produced is a drum or a circulation system having saddle-like supports and/or V-shaped compartments.

11. Arrangement according to Claim 9 or 10, characterized in that each image recording device or reading head is assigned a light source (L).

12. Arrangement according to one of Claims 9 to 11 characterized in that visual means (20) for carrying out the calibration and for monitoring the method are provided.

## Revendications

1. Procédé de contrôle destiné à être appliqué à la fabrication des produits imprimés constitués par différentes pièces détachées imprimées (B.1 à B.4), qui sont réunies par mise en cahiers, encartage et/ou assemblage pour cette fabrication, dans lequel procédé le produit (P) en cours de réalisation est acheminé dans un flux de produits, dans lequel les produits sont transportés en continu dans un sens de transport (F), qui est sensiblement transversal à la plus grande dimension de leur surface principale, et avec une cadence de transport déterminée par la vitesse de transport et par la distance entre les produits dans le flux de produits, tandis que les différentes pièces détachées sont ajoutées aux produits en cours de réalisation les unes après les autres aux postes de regroupement (Z.1 à Z.4), caractérisé en ce que le produit (P) en cours de réalisation est soumis à un contrôle optique et/ou électronique exécuté après les postes de regroupement (Z.1 à Z.4), une image du produit ou une zone partielle du produit étant enregistrée par un dispositif de prise de vue (K.1 à K.6) ou une information sur une partie du produit étant enregistrée par une tête de lecture (K.10) mobile, la fonction de prise de vue ou la fonction de lecture étant synchronisée, par une unité de synchronisation (T), avec la cadence de transport et avec une cadence de précision, qui résulte d'une subdivision de la cadence de transport, avec le transport des produits en cours de réalisation et avec l'addition des pièces détachées, les images enregistrées ou les informations lues étant traitées par voie électronique, alors que chaque image enregistrée est comparée à une image de référence enregistrée au cours d'un processus d'étalonnage ou entrée numériquement et sauvegardée ou chaque information lue est comparée à des informations théoriques, les résultats du traitement électronique étant transformés en signaux de commande pour le traitement ultérieur ou pour le transport ultérieur des produits obtenus après la mise en cahiers, l'encartage ou l'assemblage, ou en signaux d'alarme destinés à activer des moyens d'alarme.

2. Procédé de contrôle selon la revendication 1, caractérisé en ce que la fonction de prise de vue ou la fonction de lecture est commandée par une commande de hiérarchie supérieure, de manière à être activée uniquement pendant les cadences de transport au cours desquelles la pièce détachée appropriée doit être ajoutée au produit en cours de réalisation et en ce que ladite fonction n'est pas exécutée lorsque la pièce détachée appropriée n'est pas ajoutée.

3. Procédé de contrôle selon la revendication 1 ou 2, caractérisé en ce que les produits imprimés sont réalisés par la mise en cahiers des pièces détachées posées sur des supports en forme de selle et en ce que les images ou les informations à traiter sont enregistrées ou sont lues sur une partie de la face extérieure des produits en cours de réalisation.

4. Procédé de contrôle selon l'une quelconque des revendications 1 à 3, caractérisé en ce que les produits imprimés sont réalisés par l'encartage des pièces détachées et en ce que les images ou les informations à traiter sont enregistrées ou sont lues sur une partie de la face intérieure des produits ouverts.

5. Procédé de contrôle selon l'une quelconque des revendications 1 à 3, caractérisé en ce que des produits formant un empilage sont réalisés par assemblage dans des postes en forme de V et en ce que les images ou les informations à traiter sont enregistrées ou sont lues sur une partie d'une face principale des produits formant un empilage.

6. Procédé de contrôle selon l'une quelconque des revendications 1 à 5, caractérisé en ce que le processus d'étalonnage consiste à démarrer la fabrication des produits imprimés sans contrôle, à l'arrêter si après chaque station de regroupement se présente, en position de réception, un produit en cours de réalisation correct, correspondant à la station de regroupement précédente, à exécuter un réglage précis des dispositifs de prise de vue et à enregistrer et sauvegarder les images de référence.

7. Procédé de contrôle selon l'une quelconque des revendications 2 à 6, caractérisé en ce qu'un processus d'étalonnage, dans lequel ont été sauvegardées des images enregistrées ou des informations lues sous forme d'images théoriques ou d'informations théoriques, peut être initialisé à tout moment et peut être exécuté sans arrêter la fabrication des produits imprimés.

8. Procédé de contrôle selon l'une quelconque des revendications 2 à 7, caractérisé en ce que les images théoriques ou les informations théoriques enregistrées en mémoire concernent une plus grande partie du produit en cours de réalisation que les images à enregistrer ou les informations à lire pour le procédé de contrôle.

9. Dispositif destiné à la mise en oeuvre du procédé selon l'une des revendications 1 à 8, lequel dispositif comprend des moyens pour le transport continu des produits en cours de réalisation (P) dans un sens de transport (F) et des moyens pour ajouter les différentes pièces détachées (B.1 à B.4) aux produits en cours de réalisation, dans des postes de regroupement (Z.1 à Z.4) montés les uns derrière les autres dans le sens de transport (F), caractérisé en ce qu'un dispositif de prise de vue fixe ou une tête de lecture (K.1 à K.6, K.10) mobile est monté en aval des postes de regroupement (Z.1 à Z.4) dans le sens du transport (F), lesquels dispositifs de prise de vue ou têtes de lecture sont montés en dehors du flux des produits dans une disposition angulaire par rapport au sens du transport (F) dans le sens inverse du flux de transport, en ce que les dispositifs de prise de vue où les têtes de lecture sont raccordés à des unités de traitement (V.1 à V.3), auxquelles sont associées des mémoires individuelles (E.1 à E.4) ou une mémoire commune, et en ce qu'il est prévu de monter une unité de synchronisation (T) destinée à synchroniser la fonction de prise de vue ou la fonction de lecture avec le transport des produits en cours de réalisation et avec le processus d'addition des pièces détachées.

10. Dispositif selon la revendication 9, caractérisé en ce que les moyens pour le transport continu des produits en cours de réalisation sont un tambour ou un système en boucle muni de supports en forme de selle et/ou de compartiments en forme de V.

11. Dispositif selon la revendication 9 ou 10, caractérisé en ce qu'à chaque dispositif de prise de vue ou tête de lecture est attribuée une source de lumière (L).

12. Dispositif selon les revendications 9 à 11, caractérisé en ce que les moyens visuels (20) sont prévus pour la réalisation de l'étalonnage et de la surveillance du processus.
